# EUROPEAN PATENT APPLICATION

(11) **EP 3 789 140 A1**
(43) Date of publication of application: **10.03.2021**
(21) Application number: 20194865.0
(22) Date of filing: 07.09.2020
(51) Int. Cl.: B22F 10/37, B22F 12/90, B33Y 30/00, B33Y 50/02, B22F 10/28

(54) **THREE-DIMENSIONAL ADDITIVE MANUFACTURING DEVICE AND METHOD WITH DETECTION OF POWDER BED ABNORMALITIES**

(30) Priority: 09.09.2019 JP 2019163853
(71) Applicant: Jeol Ltd., Akishima-shi, Tokyo 196-8558 (JP)
(72) Inventor: TSUTAGAWA, Nari, Akishima, Tokyo 196-8558 (JP); SATO, Takashi, Akishima, Tokyo 196-8558 (JP); KITAMURA, Shinichi, Akishima, Tokyo 196-8558 (JP)
(74) Representative: Boult Wade Tennant LLP

(57) **Abstract**

There are provided a three-dimensional powder bed fusion additive manufacturing apparatus and a three-dimensional powder bed fusion additive manufacturing method for suppressing an occurrence of a defect in a shaped object.

A three-dimensional powder bed fusion additive manufacturing apparatus (50) includes: a base plate (10); a Z drive mechanism (5) configured to move the base plate (10) in a vertical direction; a powder supplier configured to supply a powder sample onto the base plate (10) to laminate a powder layer; an electron gun (2) configured to generate a beam to be irradiated to the powder layer; a controller configured to control the Z drive mechanism (5), the powder supplier, and the electron gun (2) to irradiate the beam to a powder bed that is an uppermost layer of the powder layer and perform melting on a two-dimensionally shaped region in which a shaped model is sliced by one layer to shape a three-dimensionally shaped object; and two segment detectors (16A) and (16B) configured to detect a state of the powder bed.

## Description

### BACKGROUND

### Technical Field

The present invention relates to a three-dimensional powder bed fusion additive manufacturing apparatus and a three-dimensional powder bed fusion additive manufacturing method for powder bed fusion additive manufacturing a thinly spread layer of a powder sample one layer by one layer.

### Related Art

In recent years, attention has been attracted on a three-dimensional powder bed fusion additive manufacturing technique for powder bed fusion additive manufacturing a thinly spread layer of a powder sample (hereinafter, referred to as a "powder layer") one layer by one layer, and there have been developed a lot of types of three-dimensional powder bed fusion additive manufacturing techniques due to differences in material of the powder sample and in shaping technique (for example, see JP 2019-7065 A).

In the three-dimensional powder bed fusion additive manufacturing apparatus disclosed in JP 2019-7065 A, the powder sample is thinly spread all over a flat base plate. Then, with respect to the powder layer constituted of the thinly spread powder sample, by irradiating a laser beam or an electron beam as a heat source, the beam diameter of which is narrowed, to a part to be shaped, the powder sample is melted and coagulated (solidified).

The solidified region in the powder layer corresponds to a cross section when a three-dimensionally shaped object represented by three-dimensional CAD data is sliced into round slices in a plane perpendicular to the laminating direction. In addition, in the three-dimensional powder bed fusion additive manufacturing apparatus disclosed in JP 2019-7065 A, a process of moving the base plate in the height direction of the shaped object, spreading the powder sample all over the base plate, and melting and solidifying a predetermined region of the powder layer is repeatedly performed. Accordingly, a three-dimensionally structured object, in which thin round slice things are laminated, is shaped.

[Paten Literature 1] Japanese Patent Laid-Open No. 2019-7065

### SUMMARY

In the three-dimensional powder bed fusion additive manufacturing apparatus disclosed in JP 2019-7065 A, however, the shaping process (for example, irradiation of an electron beam) has been proceeded without checking the state of a powder bed, which is the thinly spread powder sample. For this reason, even in a case where an abnormality occurs in the powder bed, the shaping process is performed, and a defect may occur in the shaped object.

The present invention has been made in view of the above circumstances and has an object to provide a three-dimensional powder bed fusion additive manufacturing apparatus and a three-dimensional powder bed fusion additive manufacturing method for suppressing an occurrence of a defect in a shaped object.

According to one aspect of the present invention, a three-dimensional powder bed fusion additive manufacturing apparatus includes: a base plate; a driving unit configured to move the base plate in a vertical direction; a powder supplier configured to supply a powder sample onto the base plate to laminate a powder layer; a beam generator configured to generate a beam to be irradiated to the powder layer; a controller configured to control the driving unit, the powder supplier, and the beam generator to irradiate the beam to a powder bed that is an uppermost layer of the powder layer and perform melting on a two-dimensionally shaped region in which a shaped model is sliced by one layer to shape a three-dimensionally shaped object; and a detector configured to detect a state of the powder bed.

According to one aspect of the present invention, whether the powder bed is in a normal state is checked at any timing, and therefore, an occurrence of a defect in a shaped object can be suppressed.

### BRIEF DESCRIPTION OF DRAWINGS

FIG. 1 is a cross-sectional view showing a configuration example of a three-dimensional powder bed fusion additive manufacturing apparatus according to a first embodiment of the present invention;
FIG. 2 is a diagram showing a configuration example of two segment detectors in the three-dimensional powder bed fusion additive manufacturing apparatus according to the first embodiment of the present invention;
FIG. 3 is a block diagram showing a control system of the three-dimensional powder bed fusion additive manufacturing apparatus according to the first embodiment of the present invention;
FIG. 4 is an explanatory diagram (first) showing a procedure of a three-dimensional powder bed fusion additive manufacturing process performed by the three-dimensional powder bed fusion additive manufacturing apparatus according to the first embodiment of the present invention;
FIG. 5 is an explanatory diagram (second) showing the procedure of the three-dimensional powder bed fusion additive manufacturing process performed by the three-dimensional powder bed fusion additive manufacturing apparatus according to the first embodiment of the present invention;
FIG. 6 is an explanatory diagram (third) showing the procedure of the three-dimensional powder bed fusion additive manufacturing process performed by the three-dimensional powder bed fusion additive manufacturing apparatus according to the first embodiment of the present invention;
FIG. 7 is an explanatory diagram (fourth) showing the procedure of the three-dimensional powder bed fusion additive manufacturing process performed by the three-dimensional powder bed fusion additive manufacturing apparatus according to the first embodiment of the present invention;
FIG. 8 is an explanatory diagram (fifth) showing the procedure of the three-dimensional powder bed fusion additive manufacturing process performed by the three-dimensional powder bed fusion additive manufacturing apparatus according to the first embodiment of the present invention;
FIG. 9 is an explanatory diagram (sixth) showing the procedure of the three-dimensional powder bed fusion additive manufacturing process performed by the three-dimensional powder bed fusion additive manufacturing apparatus according to the first embodiment of the present invention;
FIG. 10 is an explanatory diagram (seventh) showing the procedure of the three-dimensional powder bed fusion additive manufacturing process performed by the three-dimensional powder bed fusion additive manufacturing apparatus according to the first embodiment of the present invention;
FIG. 11 is an explanatory diagram showing checking of a powder bed in the three-dimensional powder bed fusion additive manufacturing process performed by the three-dimensional powder bed fusion additive manufacturing apparatus according to the first embodiment of the present invention;
FIG. 12 is an explanatory diagram showing checking of the powder bed in a three-dimensional powder bed fusion additive manufacturing process performed by a three-dimensional powder bed fusion additive manufacturing apparatus according to a second embodiment of the present invention;
FIG. 13 is a schematic configuration example showing a three-dimensional powder bed fusion additive manufacturing apparatus according to a third embodiment of the present invention;
FIG. 14 is a diagram showing an image pickup region of a camera in a three-dimensional powder bed fusion additive manufacturing apparatus according to a fourth embodiment of the present invention;
FIG. 15 is a schematic configuration example showing a three-dimensional powder bed fusion additive manufacturing apparatus according to a sixth embodiment of the present invention; and
FIG. 16 is a diagram showing an image pickup region of a camera in a three-dimensional powder bed fusion additive manufacturing apparatus according to a seventh embodiment of the present invention.

### DETAILED DESCRIPTION

Hereinafter, examples of embodiments for carrying out the present invention will be described with reference to the accompanying drawings. In the drawings, common constituent elements are denoted by the same reference numerals and overlapping descriptions will be omitted.

### <1. First Embodiment>

### [Configuration of three-dimensional powder bed fusion additive manufacturing apparatus]

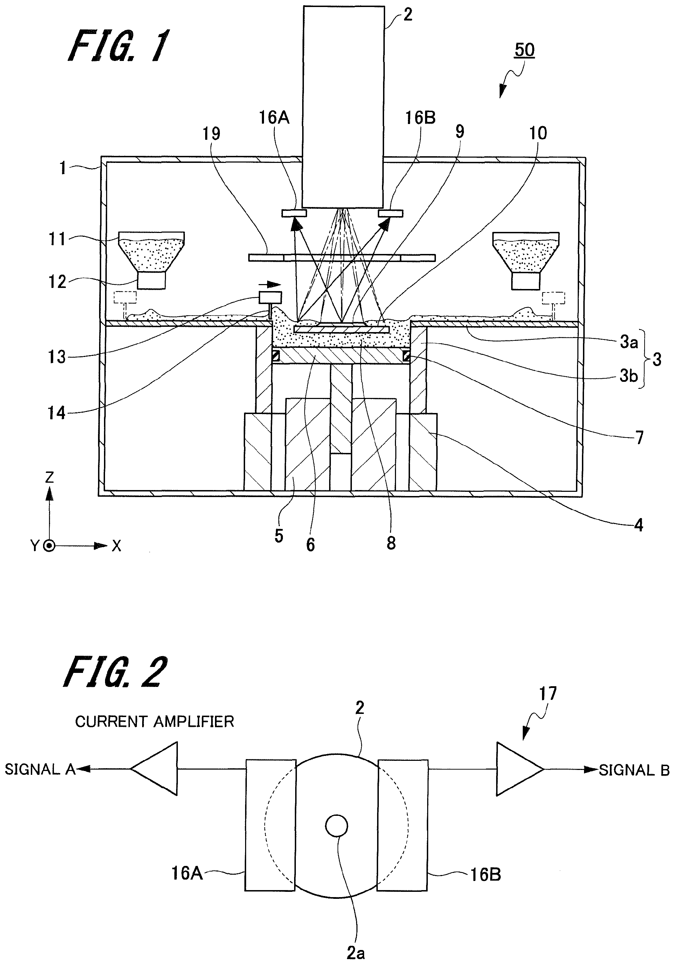

FIG. 1 is a cross-sectional view showing a configuration example of a three-dimensional powder bed fusion additive manufacturing apparatus according to a first embodiment of the present invention.

In FIG. 1, a moving direction (vertical direction) of a powder stand 6 of a three-dimensional powder bed fusion additive manufacturing apparatus 50 is defined as Z direction, and a first direction perpendicular to Z direction is defined as X direction, and a second direction perpendicular to Z direction and X direction is defined as Y direction. That is, FIG. 1 is a cross-sectional view showing a cross section orthogonal to Y direction of a vacuum container 1.

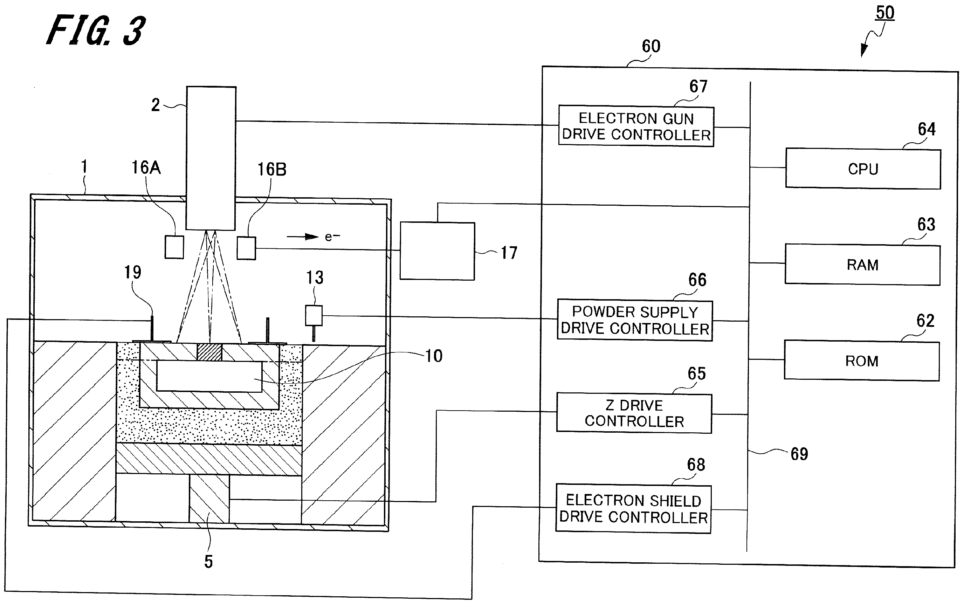

As shown in FIG. 1, the three-dimensional powder bed fusion additive manufacturing apparatus 50 includes the vacuum container 1 and a shaping controller 60 (see FIG. 3), to be described later, which is electrically connected with the vacuum container 1. An electron gun 2 (an example of a beam generator) is mounted on an upper part of the vacuum container 1. In the inside of the vacuum container 1, a shaping box 3 and a shaping box securing unit 4 for securing the shaping box 3 to the vacuum container 1 are provided. It is to be noted that the shaping box 3 may be directly secured to the vacuum container 1.

The shaping box 3 includes a table 3a, onto which metal powders 8 are supplied, and a cylindrical unit 3b continuous with the table 3a. The table 3a is formed in a rectangular plate shape in which both ends in X direction are in contact with an inner wall of the vacuum container 1, and includes a through hole in the center. The cylindrical unit 3b is formed as a cylindrical unit having a shape along the peripheral edge of the through hole in the table 3a, and one end of the cylindrical unit 3b is continuous with the lower surface of the table 3a. That is, in a case where the through hole of the table 3a is circular, the cylindrical unit 3b is formed in a cylindrical shape having an inner diameter set to be substantially identical to the diameter of the through hole.

The shaping box securing unit 4 is formed in a cylindrical shape having a cylindrical hole communicating with the cylindrical hole of the cylindrical unit 3b. The shaping box 3 (the cylindrical unit 3b) is secured to one end in an axial direction of the shaping box securing unit 4, and the other end in the axial direction of the shaping box securing unit 4 is secured to the bottom surface of the vacuum container 1. The cylindrical unit 3b of the shaping box 3 and the shaping box securing unit 4 define a pit that is a space for shaping a shaped object 9.

The powder stand 6 and a Z drive mechanism 5 (an example of a driving unit) for moving the powder stand 6 in Z direction are provided in the pit. The powder stand 6 is formed in a plate shape with a contour corresponding to the shape of the cylindrical hole of the cylindrical unit 3b. That is, the powder stand 6 is formed in a disk shape in a case where the cylindrical hole of the cylindrical unit 3b is circular. Further, a seal member 7 is attached to the side peripheral surface of the powder stand 6.

The seal member 7 is interposed between the powder stand 6 and the inner peripheral surface of the cylindrical unit 3b, and seals between an upper part (the metal powders 8 are spread) and a lower part (the Z drive mechanism 5 is disposed) of the powder stand 6. In addition, the seal member 7 is slidably in contact with the inner peripheral surface of the cylindrical unit 3b. To the Z drive mechanism 5, for example, a rack and pinion, a ball screw, or the like can be adopted. The atmosphere in the vacuum container 1 is evacuated by a vacuum pump, not shown, and the inside of the vacuum container 1 is maintained at vacuum.

Above the shaping box 3, two powder tanks 11, two fixed amount feeders 12 respectively connected with the bottoms of the two powder tanks 11, a squeegee arm 13, and a blade 14 attached to the squeegee arm 13 are provided. The powder tank 11, the fixed amount feeder 12, the squeegee arm 13, and the blade 14 are an example of a powder supplier according to the present invention.

The two powder tanks 11 face each other interposing the through hole (pit) of the table 3a. The two powder tanks 11 are filled with the metal powders 8. It is to be noted that the two powder tanks 11 may be filled with different kinds of metal powders. The fixed amount feeders 12 respectively supply predetermined amounts of the metal powders 8 from the powder tanks 11, in which the metal powders 8 are filled, onto the table 3a of the shaping box 3.

The squeegee arm 13 is configured to be movable along the table 3a between the table 3a and the fixed amount feeders 12, and reciprocates between the two powder tanks 11. The blade 14 is attached to a lower part of the squeegee arm 13. The squeegee arm 13 reciprocates between the two powder tanks 11, so that the blade 14 levels the metal powders 8 supplied on the table 3a. In this situation, the metal powders 8 on the powder stand 6 are spread to the same height with the metal powders 8 on the table 3a.

Further, a base plate 10 is disposed in the metal powders 8 on the powder stand 6. The base plate 10 serves as a base for laminating the shaped object 9. It is to be noted that the metal powders 8 play a role of a heat insulating layer that makes it difficult to transmit heat of the base plate 10 to the shaping box 3 or the powder stand 6, when the base plate 10 becomes high in temperature at the time of shaping.

In addition, two segment detectors 16A and 16B (an example of a detector) are disposed below the electron gun 2, and an electron shield 19 is disposed between the two segment detectors 16A and 16B and the through hole (pit) of the table 3a. The two segment detectors 16A and 16B are respectively secured at locations that do not interfere with the squeegee arm 13.

The electron shield 19 is formed in a substantially rectangular shape when viewed from above (Z direction), and includes an electron beam opening part corresponding to the shape of the base plate 10 so that an electron beam reaches the base plate 10, and a mask part that surrounds the electron beam opening part. The electron beam opening part is located at the center of the electron shield 19. For example, in a case where the electron shield 19 is circular, the electron beam opening part is formed in a circular shape, and in a case where the electron shield 19 is rectangular, the electron beam opening part is formed in a rectangular shape. It is to be noted that the electron shield 19 may be rectangular, and the electron beam opening part may be circular. In addition, the electron shield 19 has a flat plate shape when viewed from the side surface.

The mask part of the electron shield 19 covers an unsintered region that is constituted of unsintered powders and that is generated in a region between the table 3a of the shaping box 3 and the base plate 10. In other words, the mask part of the electron shield 19 covers the periphery of a region to be irradiated with the electron beam in the metal powders 8 spread all over the base plate 10 (hereinafter, referred to as a powder bed). The electron shield 19 serves as a shield mask, suppresses charge-up of the unsintered powders in the unsintered region, and prevents the generation of smoke scattered by the repulsion of the unsintered powders.

It is to be noted that since the electron beam opening part is provided in the electron shield 19, a temporarily sintered region constituted of temporarily sintered powders formed above the base plate 10 is not covered with the electron shield 19.

As the material of the electron shield 19, for example, a conductive material such as a metal, an alloy such as stainless steel, and the like are typical. Preferably, the same kind of material as the metal powder that is the material of the shaped object 9 may be applicable. However, the material of the electron shield 19 is not limited to these materials as long as the material serves as a shield. In addition, although not shown, the electron shield 19 is electrically grounded to GND.

A lifting mechanism, not shown, is attached to the electron shield 19. When an electron beam is irradiated to the base plate 10, the electron shield 19 descends from a standby position (see FIG. 1) and moves to a shield position on the shaping surface. On the other hand, when the powder bed is formed on the base plate 10, the electron shield 19 ascends from the shield position and moves to the standby position that does not interfere with the squeegee arm 13 or the blade 14.

It is to be noted that in the present embodiment, the electron shield 19 is configured to move in Z direction. However, the electron shield of the three-dimensional powder bed fusion additive manufacturing apparatus according to the present invention may be configured to move in X direction or Y direction, for example.

FIG. 2 is a diagram showing a configuration example of the two segment detectors 16A and 16B in the three-dimensional powder bed fusion additive manufacturing apparatus 50.

As shown in FIG. 2, the two segment detectors 16A and 16B face each other in X direction interposing an electron beam radiation port 2a in the electron gun 2. In addition, the distance between the centers of the two segment detectors 16A and 16B is set to be equal to or longer than the length of at least a region that is scanned with the electron beam (substantially the same with the region of the base plate 10).

Current amplifiers 17 are respectively connected with the two segment detectors 16A and 16B, and a signal A and a signal B, which are outputs from the respective current amplifiers 17, are transmitted to the shaping controller 60 (see FIG. 3). In the shaping controller 60, a backscattered electron image (luminance) signal is obtained from a calculation result of A - B or (A - B)/(A + B).

In the present embodiment, a region slightly smaller than the base plate 10 is scanned with an electron beam. For example, a case where the shaped object 9 is not exposed from the powder bed and a case where the shaped object 9 is exposed from the powder bed are different in amount of backscattered electrons incident on the two segment detectors 16A and 16B. Therefore, in a case where there is a difference in the amount of the backscattered electrons incident on the two segment detectors 16A and 16B at a timing when the shaped object 9 is not exposed from the powder bed, an abnormality that has occurred in the powder bed can be detected.

On the other hand, in a case where there is no difference in the amount of the backscattered electrons incident on the two segment detectors 16A and 16B at the timing when the shaped object 9 is not exposed from the powder bed, the powder bed that is normal can be detected.

In the present embodiment, the state of the powder bed is detected by using the two segment detectors 16A and 16B. However, as a detector according to the present invention, one electronic detector may be used to detect the state of the powder bed. Since a contrast is generated in the backscattered electrons depending on the density (atomic number) of an observed object to be irradiated with the electron beam, the backscattered electrons are emitted more as the density is higher (the atomic number is greater), and the backscattered electron image (luminance) becomes brighter. Accordingly, when the shaped object 9 is exposed from the powder bed (there is a bulk surface), the backscattered electron image (luminance) of the exposed shaped object 9 becomes brighter than the other parts. Hence, an occurrence of an abnormality in the powder bed can be detected.

FIG. 3 is a block diagram of a control system (the shaping controller 60) of the three-dimensional powder bed fusion additive manufacturing apparatus.

The three-dimensional powder bed fusion additive manufacturing apparatus 50 includes the shaping controller 60, which is electrically connected with the vacuum container 1. The shaping controller 60 includes a Read Only Memory (ROM) 62, a Random Access Memory (RAM) 63, a Central Processing Unit (CPU) 64, a Z drive controller 65, a powder supply drive controller 66, an electron gun drive controller 67, and an electron shield drive controller 68.

The shaping controller 60 transmits and receives information according to a predetermined format via a communication interface (not shown) to and from the respective driving units of the three-dimensional powder bed fusion additive manufacturing apparatus 50. As such a communication interface, for example, a serial interface is applied.

The ROM 62 is a non-volatile storage unit for storing a shaping program performed by the CPU 64, parameters of the shaped object 9, and the like. The RAM 63 is a volatile storage unit for temporarily storing data, and is used as a work area. It is to be noted that the shaping program and the data of the parameters of the shaped object 9, and the like stored in the ROM 62 may be stored in a nonvolatile large-capacity storage device.

The CPU 64 reads out the shaping program stored in the ROM 62 to the RAM 63, and controls processes and operations of the respective units according to the shaping program. The CPU 64 is connected with the respective units so as to be capable of transmitting and/or receiving data via a system bus 69 to and from each other. The CPU 64, the ROM 62, and the RAM 63 are an example of a controller.

The Z drive controller 65 controls the operation of the Z drive mechanism 5 under the control of the CPU 64. The powder supply drive controller 66 controls the operations of the fixed amount feeders 12 and the squeegee arm 13 under the control of the CPU 64. The electron gun drive controller 67 controls the intensity and irradiation position of the electron beam emitted from the electron gun 2 under the control of the CPU 64. The electron shield drive controller 68 controls the operation of the electron shield 19 (the lifting mechanism, not shown) under the control of the CPU 64.

### [Three-dimensional powder bed fusion additive manufacturing process]

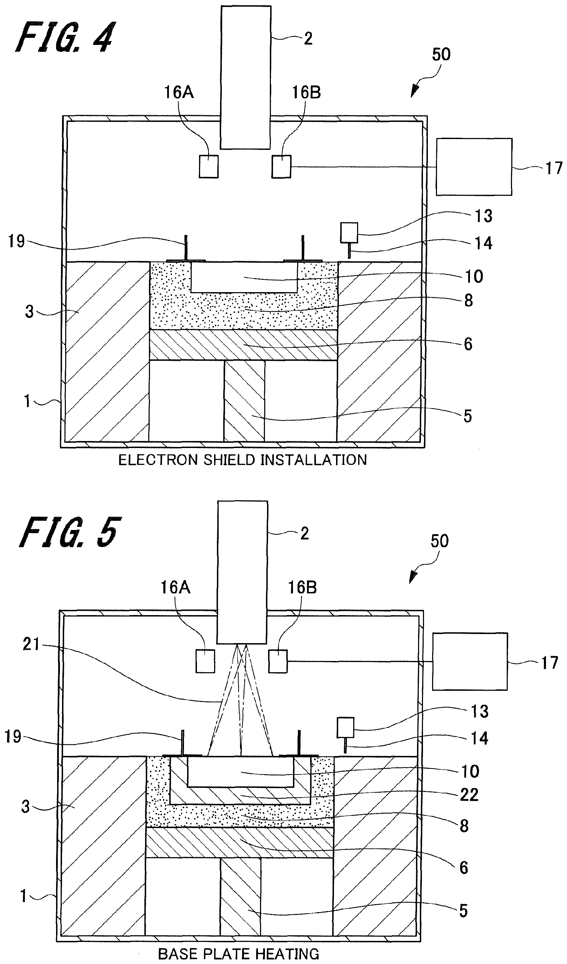

Next, a fundamental three-dimensional powder bed fusion additive manufacturing process according to the present embodiment will be described with reference to FIGS. 4 to 10.

### <Electron shield installation step>

FIG. 4 is an explanatory diagram (first) showing a procedure of a three-dimensional powder bed fusion additive manufacturing process, and shows a state where the electron shield 19 is installed at the shield position.

As shown in FIG. 4, in the three-dimensional powder bed fusion additive manufacturing process, first, an electron shield installation step is performed.

In the electron shield installation step, the electron shield drive controller 68 (see FIG. 3) controls the electron shield 19 (the lifting mechanism, not shown) to descend the electron shield 19 from the standby position (see FIG. 1) and install (dispose) the electron shield 19 at the shield position. Accordingly, the electron shield 19 covers the metal powders 8 between the base plate 10 and the shaping box 3. In this situation, the electron shield 19 is brought into contact with the metal powders 8.

### <Base plate heating step>

FIG. 5 is an explanatory diagram (second) showing the procedure of the three-dimensional powder bed fusion additive manufacturing process, and shows a state where the base plate 10 is heated.

As shown in FIG. 5, in the three-dimensional powder bed fusion additive manufacturing process, next, a base plate heating step is performed.

In the base plate heating step, the electron gun drive controller 67 (see FIG. 3) controls the electron gun 2 to irradiate the base plate 10 with an electron beam 21 to heat the base plate 10.

To be specific, the electron beam 21 is made to scan and is irradiated to a region slightly narrower than the entire upper surface of the base plate 10 (a region where the electron beam 21 is not applied to the electron shield 19). Then, the base plate 10 is heated beforehand up to a temperature at which the metal powders 8 to be spread subsequently is temporarily sintered. In this situation, without focusing the electron beam 21 on the upper surface of the base plate 10, by irradiating the electron beam 21 and scanning the region with the electron beam 21 in a defocus state (increasing a beam diameter), local melting of the base plate 10 is avoided.

As shown in FIG. 5, when the temperature of the base plate 10 is raised, the metal powders 8 around the base plate 10 is temporarily sintered to become a temporarily sintered body 22. In addition, since the electron shield 19 is installed at the shield position, even in a case where the electron beam 21 is irradiated to the base plate 10, the charge-up of the unsintered powders in the unsintered region can be suppressed, and the generation of smoke can be prevented.

### <Squeegeeing step>

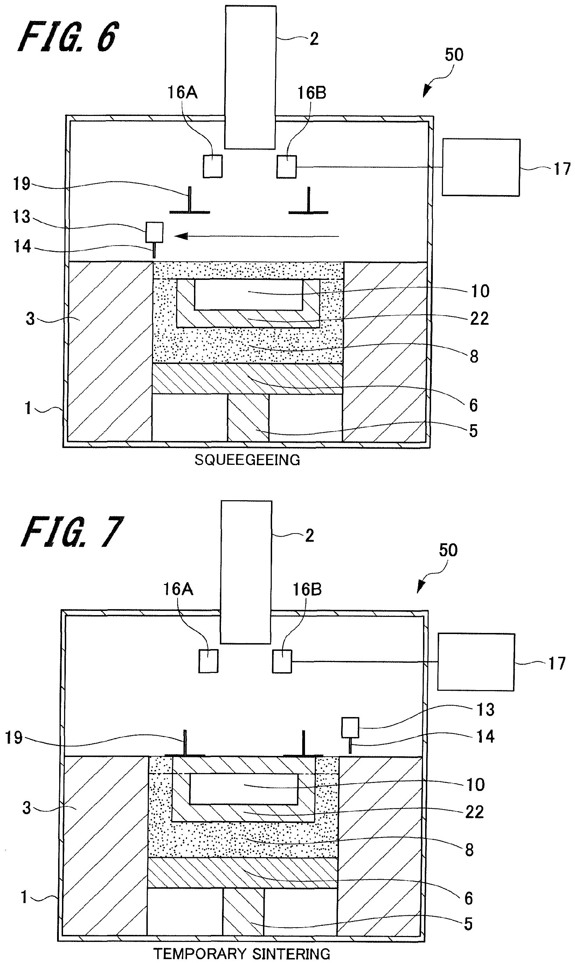

FIG. 6 is an explanatory diagram (third) showing the procedure of the three-dimensional powder bed fusion additive manufacturing process, and shows a state where one layer of the metal powders 8 is spread.

As shown in FIG. 6, in the three-dimensional powder bed fusion additive manufacturing process, a squeegeeing step is performed next.

In the squeegeeing step, first, the electron shield drive controller 68 (see FIG. 3) controls the electron shield 19 (the lifting mechanism, not shown) to ascend the electron shield 19 from the shield position and locate the electron shield 19 at the standby position. Then, the Z drive controller 65 (see FIG. 3) controls the Z drive mechanism 5 to descend the powder stand 6 and locate the upper surface of the base plate 10 at a location slightly lower (by one layer) than the upper surface of the table 3a.

Next, the powder supply drive controller 66 (see FIG. 3) controls the fixed amount feeders 12 to respectively supply the predetermined amounts of the metal powders 8 from the powder tanks 11 onto the table 3a. In addition, the powder supply drive controller 66 controls the squeegee arm 13 to move the squeegee arm 13 along the upper surface of the table 3a. As a result, the blade 14 levels the metal powders 8 supplied on the table 3a, and the powder bed in which one layer of the metal powders 8 is spread all over the base plate 10 is formed.

### <Temporary sintering step>

FIG. 7 is an explanatory diagram (fourth) showing the procedure of the three-dimensional powder bed fusion additive manufacturing process, and shows a state where the metal powders 8 spread all over the base plate 10 is temporarily sintered.

As shown in FIG. 7, in the three-dimensional powder bed fusion additive manufacturing process, a temporary sintering step is performed next.

In the temporary sintering step, due to the heat of the base plate 10 heated in the base plate heating step, the metal powders 8 spread in the squeegeeing step becomes a temporarily sintered body 22. In the temporary sintering step, the electron shield 19 may be descended from the standby position (see FIG. 6) to be installed (located) at the shield position. Thus, when the metal powders 8 are temporarily sintered, the electron shield 19 necessitated in the next step can be installed, and the cycle time can be shortened.

### <Powder-heat step>

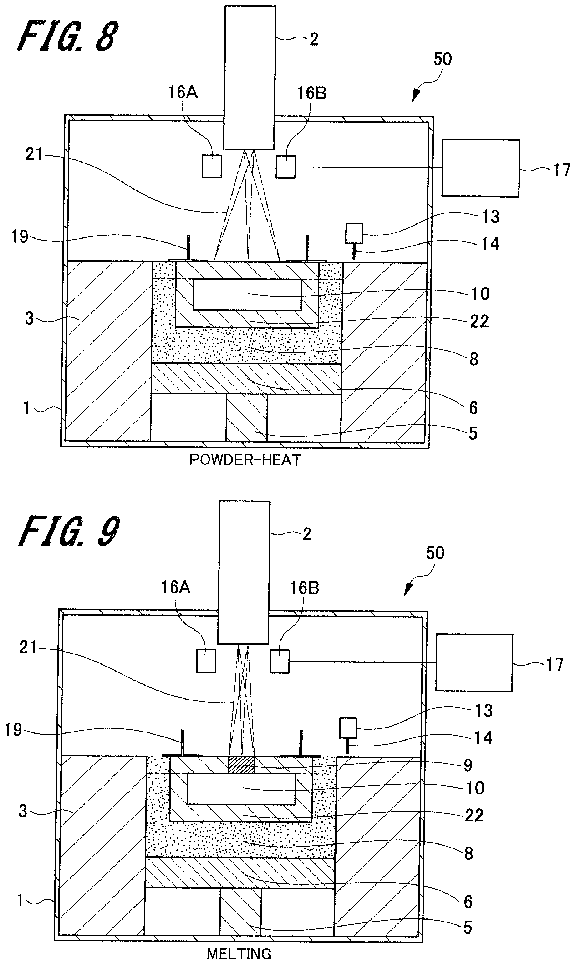

FIG. 8 is an explanatory diagram (fifth) showing the procedure of the three-dimensional powder bed fusion additive manufacturing process, and shows a state where the surface of the temporarily sintered body 22 is heated by the electron beam 21.

As shown in FIG. 8, in the three-dimensional powder bed fusion additive manufacturing process, a powder-heat step is performed next.

In the powder-heat step, the electron gun drive controller 67 (see FIG. 3) controls the electron gun 2 to irradiate the electron beam 21 to the surface of the temporarily sintered body 22 on the base plate 10 to heat the surface of the temporarily sintered body 22. To be specific, in a similar manner to the above-described base plate heating step, the electron beam 21, in the defocus state, is made to scan and is irradiated to the surface of the temporarily sintered body 22 on the base plate 10.

In this situation, since the electron shield 19 is installed at the shield position, even when the electron beam 21 is irradiated to the temporarily sintered body 22, the charge-up of the unsintered powders in the unsintered region can be suppressed, and the generation of smoke can be prevented.

### <Melting step>

FIG. 9 is an explanatory diagram (sixth) showing the procedure of the three-dimensional powder bed fusion additive manufacturing process, and shows a state where the temporarily sintered body 22 is melted into the form of the shaped object 9 by the electron beam 21.

As shown in FIG. 9, in the three-dimensional powder bed fusion additive manufacturing process, a melting step is performed next.

In the melting step, the electron gun drive controller 67 (see FIG. 3) controls the electron gun 2 to irradiate the electron beam 21 to the surface of the temporarily sintered body 22 on the base plate 10, and melts a two-dimensionally shaped region in which a shaped model represented by a shaping program is sliced by one layer. In this situation, the electron beam 21 is focused, and the current density is increased to melt the temporarily sintered body 22. Such a melting step is referred to as a melt, in some cases.

Further, also in the melting step, since the electron shield 19 is installed at the shield position, even when the electron beam 21 is irradiated to the temporarily sintered body 22, the charge-up of the unsintered powders in the unsintered region can be suppressed, and the generation of smoke can be prevented.

### <After-heat step>

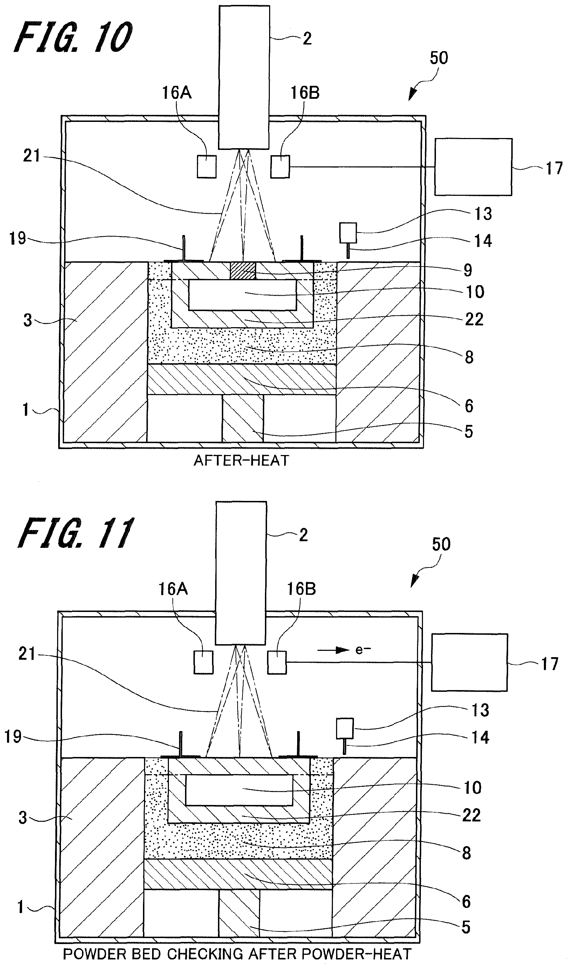

FIG. 10 is an explanatory diagram (seventh) showing the procedure of the three-dimensional powder bed fusion additive manufacturing process, and shows a state where the surface of the shaped object 9 and the surface of the temporarily sintered body 22 after the melting are heated.

As shown in FIG. 10, in the three-dimensional powder bed fusion additive manufacturing process, an after-heat step is performed next.

In the after-heat step, the electron gun drive controller 67 (see FIG. 3) controls the electron gun 2 to irradiate the electron beam 21 to the surface of the shaped object 9 on the base plate 10 and the surface of the temporarily sintered body 22 to heat the surface of the shaped object 9 and the surface of the temporarily sintered body 22. To be specific, in a similar manner to the above-described base plate heating step, the electron beam 21, in the defocus state, is made to scan and is irradiated to the surface of the shaped object 9 and the surface of the temporarily sintered body 22.

After the completion of the after-heat step, the process returns to the squeegeeing step in the next layer. The squeegeeing step, the temporary sintering step, the powder-heat step, the melting step, and the after-heat step are repeatedly performed. Then, after the completion of the after-heat step in the final layer of the shaped object, the three-dimensional powder bed fusion additive manufacturing process is ended. As a result, the melting (melt) part is laminated one layer by one layer, and the shaped object 9 is formed.

### <Powder bed checking step after powder-heat>

FIG. 11 is an explanatory diagram showing a powder bed checking step after the powder-heat in the three-dimensional powder bed fusion additive manufacturing process.

In the first embodiment, the powder bed checking step after the powder-heat is performed between the above-described powder-heat step and melting step. That is, whether an abnormality has occurred in the powder bed after the powder-heat step is checked.

In the powder bed checking step after the powder-heat, first, the electron gun drive controller 67 (see FIG. 3) controls the electron gun 2 to scan the powder bed with a low emission current that enables detection of a backscattered electron. Next, the backscattered electrons generated by scanning the powder bed are detected by the two segment detectors 16A and 16B to check the state of the powder bed.

The powder bed immediately after the powder-heat step is completed is covered with the powders as a whole, because the powders are squeegeed in a case of a normal state. Hence, the bulk surface is not found. The CPU 64 determines that the powder bed is normal, when confirming that the entire powder bed is covered with the powders from the backscattered electron image signal that has been acquired based on the detection results of the two segment detectors 16A and 16B. In a case where the CPU 64 determines that the powder bed is normal, the process proceeds to the melting step that is the next step.

On the other hand, in a case where the bulk surface is found on a part of the powder bed from the currents that have been detected by the two segment detectors 16A and 16B, the CPU 64 determines that an abnormality has occurred in the powder bed. In this case, the electron gun drive controller 67 (see FIG. 3) controls the electron gun 2 to perform beam scanning similar to the after-heat to heat the current powder bed. Then, the squeegeeing step is performed again, and subsequently, the powder-heat step is performed again. That is, in the case where the CPU 64 determines that the abnormality has occurred in the powder bed, the shaping of the current layer is performed again from the after-heat step.

In this manner, in the first embodiment, after the completion of the powder-heat step, whether the powder bed is in a normal state is checked. In the case where the abnormality is found in the powder bed, the after-heat step, the squeegeeing step, and the powder-heat step are performed again. Accordingly, the melting step can be performed when the powder bed is in the normal state. As a result, an occurrence of a defect in the shaped object 9 can be suppressed.

### <2. Second Embodiment>

### [Configuration of three-dimensional powder bed fusion additive manufacturing apparatus]

The configuration of a three-dimensional powder bed fusion additive manufacturing apparatus according to a second embodiment is the same as the configuration of the above-described three-dimensional powder bed fusion additive manufacturing apparatus 50 according to the first embodiment. Therefore, here, the description of the configuration of the three-dimensional powder bed fusion additive manufacturing apparatus according to the second embodiment is omitted.

### [Three-dimensional powder bed fusion additive manufacturing process]

The fundamental three-dimensional powder bed fusion additive manufacturing process according to the second embodiment is the same as the above-described fundamental three-dimensional powder bed fusion additive manufacturing process according to the first embodiment (see FIGS. 4 to 10). Therefore, here, the description of the fundamental three-dimensional powder bed fusion additive manufacturing process according to the second embodiment is omitted.

### <Powder bed checking step after powder-heat>

The powder bed checking step after the powder-heat according to the second embodiment is the same as the above-described powder bed checking step after the powder-heat according to the first embodiment. Therefore, here, the description of the powder bed checking step after the powder-heat according to the second embodiment is omitted.

In the second embodiment, after the completion of the powder-heat step, whether the powder bed is in a normal state is checked. In the case where the abnormality is found in the powder bed, the after-heat step, the squeegeeing step, and the powder-heat step are performed again. Accordingly, the melting step can be performed when the powder bed is in the normal state. As a result, an occurrence of a defect in the shaped object 9 can be suppressed.

### <Powder bed checking step after melting>

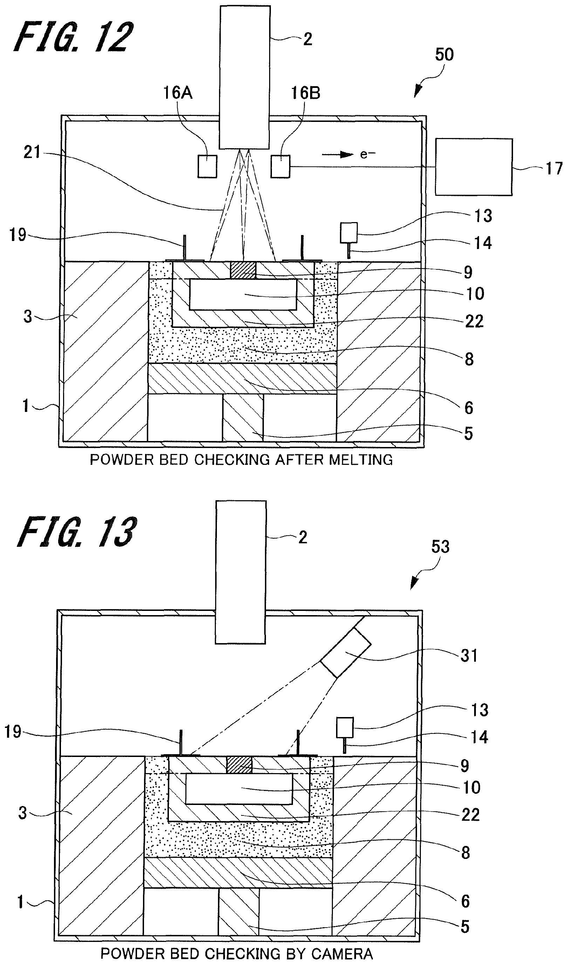

FIG. 12 is an explanatory diagram showing a powder bed checking step after melting in the three-dimensional powder bed fusion additive manufacturing process.

In the second embodiment, the powder bed checking step after the melting is performed between the above-described melting step and after-heat step. That is, whether an abnormality has occurred in the powder bed after the melting step is checked.

In the powder bed checking step after the melting, first, the electron gun drive controller 67 (see FIG. 3) controls the electron gun 2 to scan the powder bed with a low emission current with which a backscattered electron can be detected. Next, the backscattered electrons generated by scanning the powder bed are detected by the two segment detectors 16A and 16B to check the state of the powder bed.

The shape of the powder bed immediately after the melting step is completed is the same as the shape of the powder bed that has been checked in the powder bed checking step after the powder-heat (except for the bulk surface), in a case of a normal state. In a case where the shape of the powder bed obtained from the currents that have been detected by the two segment detectors 16A and 16B (except for the bulk surface) is the same as the shape of the powder bed checked in the powder bed checking step after the powder-heat, the CPU 64 determines that the powder bed is normal. In this case, the process proceeds to the after-heat step that is the next step.

On the other hand, in a case where the shape of the powder bed obtained from the currents that have been detected by the two segment detectors 16A and 16B is different from the shape of the powder bed checked in the powder bed checking step after the powder-heat, the CPU 64 determines that an abnormality has occurred in the powder bed. In this case, the electron gun drive controller 67 (see FIG. 3) controls the electron gun 2 to perform beam scanning similar to the after-heat to heat the current powder bed.

Then, the three-dimensional powder bed fusion additive manufacturing apparatus 50 performs the squeegeeing step again, and subsequently, performs the powder-heat step again. After completion of the powder-heat step, the powder bed checking step after the powder-heat is performed. That is, in the case where the CPU 64 determines that the abnormality has occurred in the powder bed, the shaping of the current layer is performed again from the after-heat step.

In this manner, in the second embodiment, after the completion of the melting step, whether the powder bed is in a normal state is checked. In the case where the abnormality is found in the powder bed, the after-heat step, the squeegeeing step, and the powder-heat step are performed again. Then, the powder bed checking step after the powder-heat is performed. Accordingly, the melting step can be performed when the powder bed is in the normal state. As a result, an occurrence of a defect in the shaped object 9 can be suppressed.

### <3. Third Embodiment>

### [Configuration of three-dimensional powder bed fusion additive manufacturing apparatus]

The configuration of a three-dimensional powder bed fusion additive manufacturing apparatus 53 according to a third embodiment is the same as the configuration of the above-described three-dimensional powder bed fusion additive manufacturing apparatus 50 according to the first embodiment, but the detector is different. Therefore, here, the detector according to the third embodiment will be described. The description of the constituent elements common to the configuration of the three-dimensional powder bed fusion additive manufacturing apparatus 50 according to the first embodiment is omitted.

FIG. 13 is a schematic configuration example showing a three-dimensional powder bed fusion additive manufacturing apparatus according to the third embodiment of the present invention.

As shown in FIG. 13, in the three-dimensional powder bed fusion additive manufacturing apparatus 53 according to the third embodiment, a camera 31 (an example of the detector) is disposed at an upper part in the vacuum container 1.

The camera 31 picks up an image of at least a region slightly smaller than the base plate 10. In a case where an image in which the shaped object 9 is exposed from the powder bed is picked up at a timing when the shaped object 9 is not exposed from the powder bed, an abnormality that has occurred in the powder bed can be detected. On the other hand, in a case where an image in which the shaped object 9 is not exposed from the powder bed is picked up at the timing when the shaped object 9 is not exposed from the powder bed, a normality of the powder bed can be detected.

### [Three-dimensional powder bed fusion additive manufacturing process]

The fundamental three-dimensional powder bed fusion additive manufacturing process according to the third embodiment is the same as the above-described fundamental three-dimensional powder bed fusion additive manufacturing process according to the first embodiment (see FIGS. 4 to 10). Therefore, here, the description of the fundamental three-dimensional powder bed fusion additive manufacturing process according to the third embodiment is omitted.

### <Powder bed checking step after powder-heat>

In the third embodiment, the powder bed checking step after the powder-heat is performed between the above-described powder-heat step and melting step. That is, whether an abnormality has occurred in the powder bed after the powder-heat step is checked.

In the powder bed checking step after the powder-heat according to the third embodiment, first, a camera drive controller, not shown, controls the camera 31 to pick up an image of a region slightly smaller than the base plate 10 to check the state of the powder bed.

The powder bed immediately after the powder-heat step is completed is covered with the powders as a whole, because the powders are squeegeed in the case of a normal state. Hence, (the bulk surface of) the shaped object 9 is not found. The CPU 64 determines that the powder bed is normal, when confirming that the entire powder bed is covered with the powders from the image that has been picked up by the camera 31. In this case, the process proceeds to the melting step that is the next step.

On the other hand, in a case where (the bulk surface of) the shaped object 9 is found on a part of the powder bed from the image that has been picked up by the camera 31, the CPU 64 determines that an abnormality has occurred in the powder bed. In this case, the electron gun drive controller 67 (see FIG. 3) controls the electron gun 2 to perform beam scanning similar to the after-heat to heat the current powder bed. Then, the squeegeeing step is performed again, and subsequently, the powder-heat step is performed again. That is, in the case where the CPU 64 determines that the abnormality has occurred in the powder bed, the shaping of the current layer is performed again from the after-heat step.

In this manner, in the third embodiment, after the completion of the powder-heat step, whether the powder bed is in a normal state is checked. In the case where the abnormality is found in the powder bed, the after-heat step, the squeegeeing step, and the powder-heat step are performed again. Accordingly, the melting step can be performed when the powder bed is in the normal state. As a result, an occurrence of a defect in the shaped object 9 can be suppressed.

### <4. Fourth Embodiment>

### [Configuration of three-dimensional powder bed fusion additive manufacturing apparatus]

The configuration of a three-dimensional powder bed fusion additive manufacturing apparatus according to a fourth embodiment is the same as the configuration of the above-described three-dimensional powder bed fusion additive manufacturing apparatus 53 according to the third embodiment. Therefore, here, the description of the configuration of the three-dimensional powder bed fusion additive manufacturing apparatus according to the fourth embodiment is omitted.

### [Three-dimensional powder bed fusion additive manufacturing process]

The fundamental three-dimensional powder bed fusion additive manufacturing process according to the fourth embodiment is the same as the above-described fundamental three-dimensional powder bed fusion additive manufacturing process according to the first embodiment (see FIGS. 4 to 10). Therefore, here, the description of the fundamental three-dimensional powder bed fusion additive manufacturing process according to the fourth embodiment is omitted.

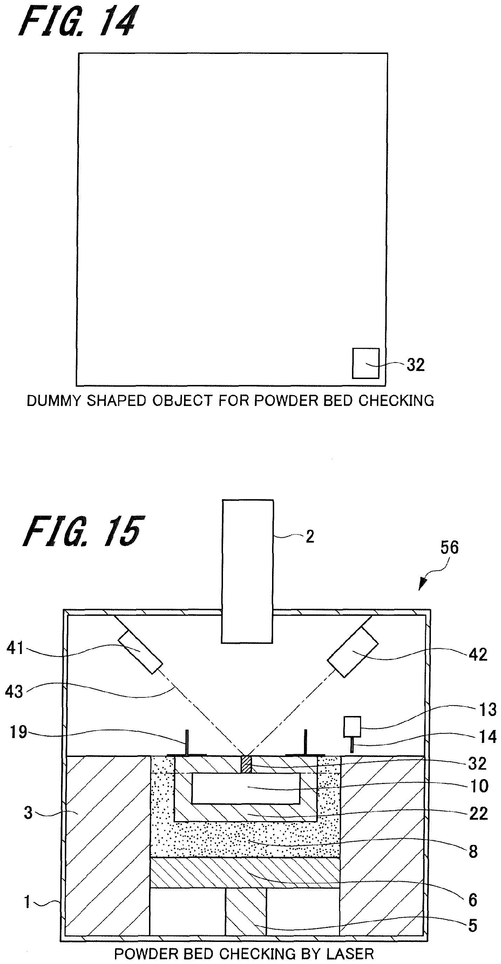

FIG. 14 is a diagram showing an image pickup region of the camera in the three-dimensional powder bed fusion additive manufacturing apparatus according to the fourth embodiment of the present invention.

As shown in FIG. 14, in the fourth embodiment, in the case where the powder bed after the melting step is normal, a dummy shaped object 32 is shaped at a location that does not interfere with the shaped object 9.

### <Powder bed checking step after powder-heat>

In the fourth embodiment, the powder bed checking step after the powder-heat is performed between the above-described powder-heat step and melting step. That is, whether an abnormality has occurred in the powder bed after the powder-heat step is checked.

In the powder bed checking step after the powder-heat, first, the camera drive controller, not shown, controls the camera 31 to pick up an image of a region slightly smaller than the base plate 10 to check the state of the powder bed.

The powder bed immediately after the powder-heat step is completed is covered with the powders as a whole, because the powders are squeegeed in a case of a normal state. Hence, the shaped object 9 and the bulk surface of the dummy shaped object 32 are not found. The CPU 64 determines that the powder bed is normal, when confirming that the entire powder bed is covered with the powders from the image that has been picked up by the camera 31. In this case, the process proceeds to the melting step that is the next step.

On the other hand, in a case where the bulk surface is found on a part of the powder bed from the image that has been picked up by the camera 31, the CPU 64 determines that an abnormality has occurred in the powder bed. In this case, the electron gun drive controller 67 (see FIG. 3) controls the electron gun 2 to perform beam scanning similar to the after-heat to heat the current powder bed. Then, the squeegeeing step is performed again, and subsequently, the powder-heat step is performed again.
That is, in the case where the CPU 64 determines that the abnormality has occurred in the powder bed, the shaping of the current layer is performed again from the after-heat step.

In this manner, in the fourth embodiment, after the completion of the powder-heat step, whether the powder bed is in a normal state is checked. In the case where the abnormality is found in the powder bed, the after-heat step, the squeegeeing step, and the powder-heat step are performed again. Accordingly, the melting step can be performed when the powder bed is in the normal state. As a result, an occurrence of a defect in the shaped object 9 can be suppressed.

### <Powder bed checking step after melting>

In the fourth embodiment, the powder bed checking step after the melting is performed between the above-described melting step and after-heat step. That is, whether an abnormality has occurred in the powder bed after the melting step is checked.

In the powder bed checking step after the melting, first, the camera drive controller, not shown, controls the camera 31 to pick up an image of a region slightly smaller than the base plate 10 to check the state of the powder bed.

In a case where the powder bed immediately after the completion of the melting step is in a normal state, (the bulk surface of) the dummy shaped object 32 is not exposed. The CPU 64 determines that the powder bed is normal, in the case where (the bulk surface of) the dummy shaped object 32 does not appear in an image that has been picked up by the camera 31. In this case, a two-dimensionally shaped region in which the dummy shaped object 32 is sliced by one layer is melted (the dummy shaped object 32 is shaped). Then, the process proceeds to the after-heat step that is the next step.

On the other hand, the CPU 64 determines that an abnormality has occurred in the powder bed, in the case where (the bulk surface of) the dummy shaped object 32 appears in the image that has been picked up by the camera 31. In this case, the electron gun drive controller 67 (see FIG. 3) controls the electron gun 2 to perform beam scanning similar to the after-heat to heat the current powder bed.

Next, the three-dimensional powder bed fusion additive manufacturing apparatus 53 performs the squeegeeing step again, and subsequently, performs the powder-heat step again. After completion of the powder-heat step, the powder bed checking step after the powder-heat is performed. That is, in the fourth embodiment, in the case where the abnormality occurs in the powder bed in the melting, the shaping of the dummy shaped object 32 is not performed. The shaping of the current layer is performed again from the after-heat step.

In this manner, in the fourth embodiment, after the completion of the melting step, whether the powder bed is in a normal state is checked. In the case where the abnormality is found in the powder bed, the shaping of the dummy shaped object 32 is not performed. The after-heat step, the squeegeeing step, and the powder-heat step are performed again. Then, the powder bed checking step after the powder-heat is performed. Accordingly, the melting step can be performed when the powder bed is in the normal state. As a result, an occurrence of a defect in the shaped object 9 can be suppressed.

### <5. Fifth Embodiment>

### [Configuration of three-dimensional powder bed fusion additive manufacturing apparatus]

The configuration of a three-dimensional powder bed fusion additive manufacturing apparatus according to a fifth embodiment is the same as the configuration of the above-described three-dimensional powder bed fusion additive manufacturing apparatus 50 according to the first embodiment. Therefore, here, the description of the configuration of the three-dimensional powder bed fusion additive manufacturing apparatus according to the fifth embodiment is omitted.

### [Three-dimensional powder bed fusion additive manufacturing process]

The fundamental three-dimensional powder bed fusion additive manufacturing process according to the fifth embodiment is the same as the above-described fundamental three-dimensional powder bed fusion additive manufacturing process according to the first embodiment (see FIGS. 4 to 10). Therefore, here, the description of the fundamental three-dimensional powder bed fusion additive manufacturing process according to the fifth embodiment is omitted.

It is to be noted that in the fifth embodiment, in the same manner as the fourth embodiment, in the case where the powder bed after the melting step is normal, the dummy shaped object 32 is shaped at a location that does not interfere with the shaped object 9 (see FIG. 14).

### <Powder bed checking step after powder-heat>

In the fifth embodiment, the powder bed checking step after the powder-heat is performed between the above-described powder-heat step and melting step. That is, whether an abnormality has occurred in the powder bed after the powder-heat step is checked.

In the powder bed checking step after the powder-heat, first, the electron gun drive controller 67 (see FIG. 3) controls the electron gun 2 to scan the powder bed with a low emission current that enables detection of a backscattered electron. Next, the backscattered electrons generated by scanning the powder bed are detected by the two segment detectors 16A and 16B to check the state of the powder bed.

The powder bed immediately after the powder-heat step is completed is covered with the powders as a whole, because the powders are squeegeed in a case of a normal state. Hence, the shaped object 9 and the bulk surface of the dummy shaped object 32 are not found. The CPU 64 determines that the powder bed is normal, when confirming that the entire powder bed is covered with the powders from the backscattered electron image signal that has been acquired based on the detection results of the two segment detectors 16A and 16B. In this case, the process proceeds to the melting step that is the next step.

On the other hand, in a case where the bulk surface is found on a part of the powder bed from the currents that have been detected by the two segment detectors 16A and 16B, the CPU 64 determines that an abnormality has occurred in the powder bed. In this case, the electron gun drive controller 67 (see FIG. 3) controls the electron gun 2 to perform beam scanning similar to the after-heat to heat the current powder bed. Then, the squeegeeing step is performed again, and subsequently, the powder-heat step is performed again. That is, in the case where the CPU 64 determines that the abnormality has occurred in the powder bed, the shaping of the current layer is performed again from the after-heat step.

In this manner, in the fifth embodiment, after the completion of the powder-heat step, whether the powder bed is in a normal state is checked. In the case where the abnormality is found in the powder bed, the after-heat step, the squeegeeing step, and the powder-heat step are performed again. Accordingly, the melting step can be performed when the powder bed is in the normal state. As a result, an occurrence of a defect in the shaped object 9 can be suppressed.

### <Powder bed checking step after melting>

In the fifth embodiment, the powder bed checking step after the melting is performed between the above-described melting step and after-heat step. That is, whether an abnormality has occurred in the powder bed after the melting step is checked.

In the powder bed checking step after the melting, first, the electron gun drive controller 67 (see FIG. 3) controls the electron gun 2 to scan the powder bed with a low emission current with which a backscattered electron can be detected. Next, the backscattered electrons generated by scanning the powder bed are detected by the two segment detectors 16A and 16B to check the state of the powder bed.

In a case where the powder bed immediately after the completion of the melting step is in a normal state, (the bulk surface of) the dummy shaped object 32 is not exposed. In a case where (the bulk surface of) the dummy shaped object 32 does not appear in the powder bed obtained from the currents that have been detected by the two segment detectors 16A and 16B, the CPU 64 determines that the powder bed is normal. In this case, a two-dimensionally shaped region in which the dummy shaped object 32 is sliced by one layer is melted (the dummy shaped object 32 is shaped). Then, the process proceeds to the after-heat step that is the next step.

On the other hand, in a case where (the bulk surface of) the dummy shaped object 32 appears in the powder bed obtained from the currents that have been detected by the two segment detectors 16A and 16B, the CPU 64 determines that an abnormality has occurred in the powder bed. In this case, the electron gun drive controller 67 (see FIG. 3) controls the electron gun 2 to perform beam scanning similar to the after-heat to heat the current powder bed. Then, the three-dimensional powder bed fusion additive manufacturing apparatus 50 performs the squeegeeing step again, and subsequently, performs the powder-heat step again. After completion of the powder-heat step, the powder bed checking step after the powder-heat is performed. That is, in the case where the CPU 64 determines that the abnormality has occurred in the powder bed, the shaping of the current layer is performed again from the after-heat step.

In this manner, in the fifth embodiment, after the completion of the melting step, whether the powder bed is in a normal state is checked. In the case where the abnormality is found in the powder bed, the after-heat step, the squeegeeing step, and the powder-heat step are performed again. Then, the powder bed checking step after the powder-heat is performed. Accordingly, the melting step can be performed when the powder bed is in the normal state. As a result, an occurrence of a defect in the shaped object 9 can be suppressed.

### <6. Sixth Embodiment>

### [Configuration of three-dimensional powder bed fusion additive manufacturing apparatus]

The configuration of a three-dimensional powder bed fusion additive manufacturing apparatus according to a sixth embodiment is the same as the configuration of the above-described three-dimensional powder bed fusion additive manufacturing apparatus 50 according to the first embodiment, but the detector is different. Therefore, here, the detector according to the sixth embodiment will be described. The description of the constituent elements common to the configuration of the three-dimensional powder bed fusion additive manufacturing apparatus 50 according to the first embodiment is omitted.

FIG. 15 is a schematic configuration example showing a three-dimensional powder bed fusion additive manufacturing apparatus according to the sixth embodiment of the present invention.

As shown in FIG. 15, in a three-dimensional powder bed fusion additive manufacturing apparatus 56 according to the sixth embodiment, a light projector 41 and a light receiver 42 are disposed at upper parts in the vacuum container 1. The light projector 41 and the light receiver 42 are an example of the detector.

The light projector 41 emits a laser light 43 to a location where a dummy shaped object 32, to be described later, is formed. The light receiver 42 receives the laser light 43 that has been reflected by (the bulk surface of) the dummy shaped object 32. Therefore, in a case where (the bulk surface of) the dummy shaped object 32 is not exposed on the powder bed, the light receiver 42 does not receive the laser light 43.

### [Three-dimensional powder bed fusion additive manufacturing process]

The fundamental three-dimensional powder bed fusion additive manufacturing process according to the sixth embodiment is the same as the above-described fundamental three-dimensional powder bed fusion additive manufacturing process according to the first embodiment (see FIGS. 4 to 10). Therefore, here, the description of the fundamental three-dimensional powder bed fusion additive manufacturing process according to the sixth embodiment is omitted.

It is to be noted that in the sixth embodiment, in the same manner as the fourth embodiment, in the case where the powder bed after the melting step is normal, the dummy shaped object 32 is shaped at a location that does not interfere with the shaped object 9 (see FIG. 14).

### <Powder bed checking step after powder-heat>

In the sixth embodiment, the powder bed checking step after the powder-heat is performed between the above-described powder-heat step and melting step. That is, whether an abnormality has occurred in the powder bed after the powder-heat step is checked.

In the powder bed checking step after the powder-heat according to the sixth embodiment, first, a light projection controller, not shown, controls the light projector 41 to emit the laser light 43 to the location where the dummy shaped object 32 is formed.

The powder bed immediately after the powder-heat step is completed is covered with the powders as a whole, because the powders are squeegeed in a case of a normal state. Hence, (the bulk surface of) the dummy shaped object 32 is not found. In a case where the light receiver 42 does not receive the laser light 43, the CPU 64 determines that the powder bed is normal. In this case, the process proceeds to the melting step that is the next step.

On the other hand, in a case where the light receiver 42 receives the laser light 43, the CPU 64 determines that an abnormal has occurred in the powder bed. In this case, the electron gun drive controller 67 (see FIG. 3) controls the electron gun 2 to perform beam scanning similar to the after-heat to heat the current powder bed. Then, the squeegeeing step is performed again, and subsequently, the powder-heat step is performed again. That is, in the case where the CPU 64 determines that the abnormality has occurred in the powder bed, the shaping of the current layer is performed again from the after-heat step.

In this manner, in the sixth embodiment, after the completion of the powder-heat step, whether the powder bed is in a normal state is checked. In the case where the abnormality is found in the powder bed, the after-heat step, the squeegeeing step, and the powder-heat step are performed again. Accordingly, the melting step can be performed when the powder bed is in the normal state. As a result, an occurrence of a defect in the shaped object 9 can be suppressed.

It is to be noted that also in the sixth embodiment, the powder bed checking step may be performed after the melting. That is, whether the powder bed is in a normal state is checked after the completion of the melting step. In the case where the powder bed that is normal is determined, the two-dimensionally shaped region in which the dummy shaped object 32 is sliced by one layer is melted (the dummy shaped object 32 is shaped). Then, the process proceeds to the after-heat step.

On the other hand, In the case where the abnormality is found in the powder bed, the after-heat step, the squeegeeing step, and the powder-heat step are performed again. Then, the powder bed checking step after the powder-heat is performed. Accordingly, the melting step can be performed when the powder bed is in the normal state. As a result, an occurrence of a defect in the shaped object 9 can be suppressed.

### <7. Seventh Embodiment>

### [Configuration of three-dimensional powder bed fusion additive manufacturing apparatus]

The configuration of a three-dimensional powder bed fusion additive manufacturing apparatus according to a seventh embodiment is the same as the configuration of the above-described three-dimensional powder bed fusion additive manufacturing apparatus 53 according to the third embodiment. Therefore, here, the description of the configuration of three-dimensional powder bed fusion additive manufacturing apparatus according to the seventh embodiment is omitted.

### [Three-dimensional powder bed fusion additive manufacturing process]

The fundamental three-dimensional powder bed fusion additive manufacturing process according to the seventh embodiment is the same as the above-described fundamental three-dimensional powder bed fusion additive manufacturing process according to the first embodiment (see FIGS. 4 to 10). Therefore, here, the description of the fundamental three-dimensional powder bed fusion additive manufacturing process according to the seventh embodiment is omitted.

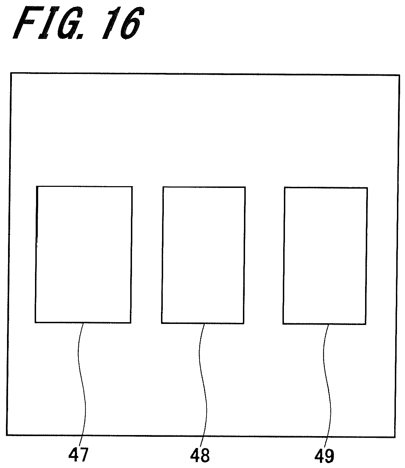

FIG. 16 is a diagram showing an image pickup region of a camera in the three-dimensional powder bed fusion additive manufacturing apparatus according to the seventh embodiment of the present invention.

As shown in FIG. 16, in the seventh embodiment, three shaped objects 47, 48, and 49 are shaped. In addition, the electron beam is irradiated in the melting step in the order of the shaped object 47, the shaped object 48, and the shaped object 49.

### <Powder bed checking step after powder-heat>

In the seventh embodiment, the powder bed checking step after the powder-heat is performed between the above-described powder-heat step and melting step. That is, whether an abnormality has occurred in the powder bed after the powder-heat step is checked.

The powder bed checking step after the powder-heat according to the seventh embodiment is the same as the powder bed checking step after the powder-heat according to the third embodiment. Therefore, here, the description of the powder bed checking step after the powder-heat according to the seventh embodiment is omitted.

### <Powder bed checking in melting>

In the seventh embodiment, in the above-described melting step, the powder bed checking is performed in the melting. In the melting step, after the completion of the melting for forming the shaped object 48, a camera drive controller, not shown, controls the camera 31 to pick up an image of a region including a location where at least the shaped object 49 is formed to check the state of the powder bed.

In a case where the powder bed is in a normal state after the completion of the melting for forming the shaped object 48, (the bulk surface of) the shaped object 49 to be shaped last is not exposed. The CPU 64 determines that the powder bed is normal, in the case where (the bulk surface of) the shaped object 49 does not appear in an image that has been picked up by the camera 31. In this case, the melting for forming the shaped object 49 is performed. Then, the process proceeds to the after-heat step that is the next step.

On the other hand, the CPU 64 determines that an abnormality has occurred in the powder bed, in the case where (the bulk surface of) the shaped object 49 appears in the image that has been picked up by the camera 31. In this case, the electron gun drive controller 67 (see FIG. 3) controls the electron gun 2 to perform beam scanning similar to the after-heat to heat the current powder bed. Next, the three-dimensional powder bed fusion additive manufacturing apparatus 53 performs the squeegeeing step again, and subsequently, performs the powder-heat step again. After completion of the powder-heat step, the powder bed checking step after the powder-heat is performed. That is, in the case where the CPU 64 determines that the abnormality has occurred in the powder bed, the shaping of the current layer is performed again from the after-heat step.

In this manner, in the seventh embodiment, whether the powder bed is in a normal state is checked in the melting step. In the case where the abnormality is found in the powder bed, the after-heat step, the squeegeeing step, and the powder-heat step are performed again. Then, the powder bed checking step after the powder-heat is performed. Accordingly, the melting step can be performed when the powder bed is in the normal state. As a result, an occurrence of a defect in the shaped objects 47 to 49 can be suppressed.

### <8. Eighth Embodiment>

### [Configuration of three-dimensional powder bed fusion additive manufacturing apparatus]

The configuration of a three-dimensional powder bed fusion additive manufacturing apparatus according to an eighth embodiment is the same as the configuration of the above-described three-dimensional powder bed fusion additive manufacturing apparatus 50 according to the first embodiment. Therefore, here, the description of the three-dimensional powder bed fusion additive manufacturing apparatus according to the eighth embodiment is omitted.

### [Three-dimensional powder bed fusion additive manufacturing process]

The fundamental three-dimensional powder bed fusion additive manufacturing process according to the eighth embodiment is the same as the above-described fundamental three-dimensional powder bed fusion additive manufacturing process according to the first embodiment (see FIGS. 4 to 10). Therefore, here, the description of the fundamental three-dimensional powder bed fusion additive manufacturing process according to the eighth embodiment is omitted.

Further, in the eighth embodiment, three shaped objects 47, 48, and 49 are shaped in the same manner as the seventh embodiment (see FIG. 16). In addition, the electron beam is irradiated in the melting step in the order of the shaped object 47, the shaped object 48, and the shaped object 49.

### <Powder bed checking step after powder-heat>

In the eighth embodiment, the powder bed checking step after the powder-heat is performed between the above-described powder-heat step and melting step. That is, whether an abnormality has occurred in the powder bed after the powder-heat step is checked.

The powder bed checking step after the powder-heat according to the eighth embodiment is the same as the powder bed checking step after the powder-heat according to the first embodiment. Therefore, here, the description of the powder bed checking step after the powder-heat according to the eighth embodiment is omitted.

### <Powder bed checking in melting>

In the eighth embodiment, in the above-described melting step, the powder bed checking is performed in the melting. In the melting step, after the completion of the melting for forming the shaped object 48, the electron gun drive controller 67 (see FIG. 3) controls the electron gun 2 to scan a region in the powder bed including a location where at least the shaped object 49 is formed with a low emission current that enables detection of a backscattered electron. Then, the backscattered electrons, which have been generated by scanning the region in the powder bed including the location where at least the shaped object 49 is formed, are detected by the two segment detectors 16A and 16B to check the state of the powder bed.

In a case where the powder bed is in a normal state after the completion of the melting for forming the shaped object 48, (the bulk surface of) the shaped object 49 to be shaped last is not exposed. The CPU 64 determines that the powder bed is normal, when confirming that (the bulk surface of) the shaped object 49 is covered with the powders from the currents that have been detected by the two segment detectors 16A and 16B. In the case where the CPU 64 determines that the powder bed is normal, the melting step for forming the shaped object 49 is performed. Then, the process proceeds to the after-heat step that is the next step.

On the other hand, when confirming that (the bulk surface of) the shaped object 49 appears from the currents that have been detected by the two segment detectors 16A and 16B, the CPU 64 determines that an abnormality has occurred in the powder bed. In the case where the abnormality that has occurred in the powder bed is determined, the electron gun drive controller 67 (see FIG. 3) controls the electron gun 2 to perform beam scanning similar to the after-heat to heat the current powder bed. Then, the squeegeeing step is performed again, and subsequently, the powder-heat step is performed again. After completion of the powder-heat step, the powder bed checking step after the powder-heat is performed. That is, in the case where the CPU 64 determines that the abnormality has occurred in the powder bed, the shaping of the current layer is performed again from the after-heat step.

In this manner, in the eighth embodiment, whether the powder bed is in a normal state is checked in the melting step. In the case where the abnormality is found in the powder bed, the after-heat step, the squeegeeing step, and the powder-heat step are performed again. Then, the powder bed checking step after the powder-heat is performed. Accordingly, the melting step can be performed when the powder bed is in the normal state. As a result, an occurrence of a defect in the shaped objects 47 to 49 can be suppressed.

Heretofore, the present invention is not limited to the above-described embodiments, and various modifications and applications can be taken without departing from the scope and spirit of the claims.

For example, the above-described embodiments have been described in detail in order to facilitate the understanding of the present invention, and are not necessarily limited to those having all the configurations described above. In addition, a part of the configurations of a certain embodiment can be replaced with a configuration of another embodiment, and a configuration of a certain embodiment can be added to a configuration of another embodiment. Further, with respect to a part of the configuration of each embodiment, another configuration can be added, replaced, or deleted.

For example, in the above-described first to sixth embodiments, an example of performing at least the powder bed checking step after the powder-heat has been described. However, the three-dimensional powder bed fusion additive manufacturing apparatus according to the present invention may perform at least the powder bed checking step after the melting. Further, in the above-described seventh and eighth embodiments, examples of the powder bed checking step after the powder-heat and the powder bed checking performed in the melting have been described. However, the three-dimensional powder bed fusion additive manufacturing apparatus according to the present invention may perform only the powder bed checking in the melting.

In addition, in the above-described first to sixth embodiments, after the powder-heat step or after the melting step, the detector (the two segment detectors 16A and 16B, the camera 31, and the light projector 41 and the light receiver 42) checks the state of the powder bed. However, the three-dimensional powder bed fusion additive manufacturing apparatus according to the present invention may check the state of the powder bed at any timing. For example, by checking the state of the powder bed after the squeegeeing step, an abnormality that has occurred in the squeegee arm 13 or the blade 14 may be detected.

Further, in the above-described first to eighth embodiments, in the case where an abnormality that has occurred in the powder bed is determined, the powder bed is heated, and the squeegeeing step is performed again. However, the three-dimensional powder bed fusion additive manufacturing apparatus according to the present invention may stop the three-dimensional powder bed fusion additive manufacturing process when determining that an abnormality has occurred in the powder bed.

In addition, in the above-described first to eighth embodiments, the metal powders 8 are supplied onto the table 3a. However, in the three-dimensional powder bed fusion additive manufacturing apparatus according to the present invention, the metal powders may be supplied on the base plate by raising the metal powders (powder material) from below the base plate. Further, in the above-described first to eighth embodiments, an example of using the electron beam for shaping has been described. However, in the three-dimensional powder bed fusion additive manufacturing apparatus according to the present invention, a laser beam may be used for shaping.

### Description of Symbols

1 vacuum container
2 electron gun (beam generator)
3 shaping box
4 shaping box securing unit
5 Z drive mechanism
6 powder stand
7 seal member
8 metal powder
9, 47, 48, 49 shaped object
10 base plate
11 powder tank
12 fixed amount feeder
13 squeegee arm
14 blade
16A, 16B two segment detector (detector)
19 electron shield
21 electron beam
22 temporarily sintered body
31 camera (detector)
32 dummy shaped object
41 light projector
42 light receiver
50, 53, 56 three-dimensional powder bed fusion additive manufacturing apparatus
60 shaping controller

## Claims

1. A three-dimensional powder bed fusion additive manufacturing apparatus (50, 53, 56) comprising:
a base plate (10);
a driving unit (5) configured to move the base plate (10) in a vertical direction;
a powder supplier (11, 12, 13, 14) configured to supply a powder sample onto the base plate (10) to laminate a powder layer;
a beam generator (2) configured to generate a beam to be irradiated to the powder layer;
a controller (62, 63, 64) configured to control the driving unit (5), the powder supplier (11, 12, 13, 14), and the beam generator (2) to irradiate the beam to a powder bed that is an uppermost layer of the powder layer and perform melting on a two-dimensionally shaped region in which a shaped model is sliced by one layer to shape a three-dimensionally shaped object; and
a detector (16A, 16B, 31, 41, 42) configured to detect a state of the powder bed.

2. The three-dimensional powder bed fusion additive manufacturing apparatus (50, 53, 56) according to claim 1, wherein
in a case of determining that the state of the powder bed is not normal from a detection result of the detector (16A, 16B, 31, 41, 42), the controller (62, 63, 64) causes the powder supplier (11, 12, 13, 14) to laminate the powder layer again to shape a current layer.

3. The three-dimensional powder bed fusion additive manufacturing apparatus (50, 53, 56) according to claim 1, wherein
the detector (16A, 16B, 31, 41, 42) detects the state of the powder bed before the melting is performed.

4. The three-dimensional powder bed fusion additive manufacturing apparatus (50, 53, 56) according to claim 1, wherein
the detector (16A, 16B, 31, 41, 42) detects the state of the powder bed after the melting is performed.

5. The three-dimensional powder bed fusion additive manufacturing apparatus (50, 53, 56) according to claim 1, wherein
the beam generator (2) generates an electron beam, and
the detector (16A, 16B, 31, 41, 42) detects a backscattered electron that is generated when the electron beam that has been generated by the beam generator (2) is irradiated to the powder bed.

6. The three-dimensional powder bed fusion additive manufacturing apparatus (50, 53, 56) according to claim 1, wherein
the detector (16A, 16B, 31, 41, 42) comprises: a light projector (41) configured to irradiate light to the powder bed; and a light receiver (42) configured to receive reflected light from the powder bed.

7. The three-dimensional powder bed fusion additive manufacturing apparatus (50, 53, 56) according to claim 1, wherein
the detector (16A, 16B, 31, 41, 42) serves as a camera configured to pick up an image of the powder bed.

8. The three-dimensional powder bed fusion additive manufacturing apparatus (50, 53, 56) according to claim 1, wherein
the beam generator (2) generates an electron beam,
a space for shaping a dummy shaped object is provided in a region of the powder bed to which the electron beam is irradiated,
the detector (16A, 16B, 31, 41, 42) detects the state of the powder bed after the melting is performed, and
the controller (62, 63, 64) shapes the dummy shaped object, in a case of determining that the state of the powder bed is normal from a detection result of the detector (16A, 16B, 31, 41, 42).

9. The three-dimensional powder bed fusion additive manufacturing apparatus (50, 53, 56) according to claim 1, wherein
the beam generator (2) generates an electron beam,
further comprising an electron shield (19) configured to shield the powder layer when the beam generator (2) irradiates the electron beam to the powder bed, and wherein
the electron shield (19) comprises: an opening part configured to allow the electron beam to pass through; and a mask part configured to cover a periphery of a region in the powder bed to which the electron beam is irradiated.

10. A three-dimensional powder bed fusion additive manufacturing method comprising:
a squeegeeing step for supplying, by a powder supplier (11, 12, 13, 14), a powder sample onto a base plate (10) to laminate a powder layer;
a powder-heat step for irradiating, by a beam generator (2), a beam to a powder bed that is an uppermost layer of the powder layer to heat a surface of the powder bed;
a powder bed checking step for detecting, by a detector (16A, 16B, 31, 41, 42), a state of the powder bed after the powder-heat step, and determining, by a controller (62, 63, 64), whether the powder bed is normal from a detection result of the detector (16A, 16B, 31, 41, 42); and
a melting step for irradiating the beam to the powder bed to melt a two-dimensionally shaped region in which a shaped model is sliced by one layer, in a case where the powder bed that is normal is determined in the powder bed checking step, wherein
in a case where the powder bed that is not normal is determined in the powder bed checking step, an after-heat step for heating a current powder bed to shape a current layer, the squeegeeing step, and the powder-heat step are performed again.

11. A three-dimensional powder bed fusion additive manufacturing method comprising:
a squeegeeing step for supplying, by a powder supplier (11, 12, 13, 14), a powder sample onto a base plate to laminate a powder layer;
a powder-heat step for irradiating, by a beam generator (2), a beam to a powder bed that is an uppermost layer of the powder layer to heat a surface of the powder bed;
a melting step for irradiating the beam to the powder bed that has been heated to melt a two-dimensionally shaped region in which a shaped model is sliced by one layer; and
a powder bed checking step for detecting, by a detector (16A, 16B, 31, 41, 42), a state of the powder bed after the melting step, and determining, by a controller (62, 63, 64), whether the powder bed is normal from a detection result of the detector (16A, 16B, 31, 41, 42), wherein
in a case where the powder bed that is normal is determined in the powder bed checking step, a next layer is shaped, and
in a case where the powder bed that is not normal is determined in the powder bed checking step, an after-heat step for heating a current powder bed to shape a current layer, the squeegeeing step, and the powder-heat step are performed again.
